# EUROPEAN PATENT SPECIFICATION

(11) **EP 3 394 438 B1**
(45) Date of publication and mention of the grant of the patent: **21.04.2021**
(21) Application number: 16877730.8
(22) Date of filing: 21.12.2016
(51) Int. Cl.: F03D 7/04

(54) **METHOD AND SYSTEM OF CONTROLLING WIND TURBINES IN A WIND TURBINE FARM**
VERFAHREN UND SYSTEM ZUR STEUERUNG VON WINDTURBINEN IN EINEM WINDPARK
PROCÉDÉ ET SYSTÈME DE COMMANDE D'ÉOLIENNES DANS UN PARC ÉOLIEN

(30) Priority: 22.12.2015 DK 201570851
(43) Date of publication of application: 31.10.2018
(73) Proprietor: Envision Energy (Jiangsu) Co., Ltd., Jiangyin 214443 (CN)
(72) Inventor: SHAH, Jigar Jayesh, Houston, TX 77063 (US); ZHANG, Feng, Houston, TX 77007 (US); WANG, Linpeng, Shanghai 200000 (CN); CHEN, Anthony Tong, Sugar Land, TX 77479 (US)
(74) Representative: Patrade A/S
(86) International application number: PCT/CN2016/111291
(87) International publication number: WO 2017/107920

(56) References cited:
- EP-A1- 2 599 995
- EP-A2- 2 672 110
- WO-A2-2010/057737
- CN-A- 101 069 015
- CN-A- 102 108 943
- US-A1- 2006 132 994
- US-A1- 2009 295 159
- US-A1- 2012 112 460
- US-A1- 2013 166 082
- US-A1- 2013 166 082

## Description

### Field of the Invention

The present invention relates to a system for controlling a wind turbine in a wind turbine farm, comprising a plurality of wind turbines each having at least two wind turbine blades mounted to a hub which is further rotatably connected to a drive train arranged in said wind turbine, wherein a control unit is configured to communicate with at least one of said wind turbines and is connected to at least one ambient sensor configured to measure at least one ambient parameter.

The present invention also relates to a method for controlling a wind turbine in a wind turbine farm, the wind turbine farm comprising a plurality of wind turbines arranged relative to each other, wherein at least one ambient parameter is measured relative to at least one of said wind turbines, and processed in a control unit.

### Background of the Invention

Modern wind turbines are often arranged together in a wind turbine farm wherein the individual wind turbines are positioned relative to each other in a predetermined pattern. It is known that such a wind turbine farm may include wind turbines of different wind turbine manufactures, wind turbines having different power ratings and/or different sized wind turbine blades. The performance of the wind turbine farm can be monitored using a monitoring system positioned at a remote location, wherein the monitoring comprises a control unit capable of communicating with the wind turbine farm, e.g. via a Supervisory Control and Data Acquisition (SCADA)-link. However, the local wind turbine control systems provide limited control options for a third-party operator to regulate the performance of the wind turbine farm.

Another known problem is a wake or shadow effect caused by the wind turbines located upwind relative to the incoming wind direction. The upwind wind turbines may also generate a more turbulent airflow compared to the relative free airflow hitting the upwind wind turbines. This may in turn lead to increased loads and stresses in the downwind wind turbines located in the path of this turbulent airflow and, thus, a reduced power production from these downwind wind turbines. One way to solve this problem is to design the layout of the wind turbine farm so that the distances between the individual wind turbines are increased or to include wind turbines with different sized wind turbine blades or wind turbines having different power ratings. Another way of solving this problem is to lower the maximum design parameters of the wind turbines, however, each wind turbine is thus operated in a non-optimal setting and thus the overall power production is lowered.

WO 2013/037374 A1 discloses a control scheme for a wind turbine farm wherein the pitch angle, yaw angle or direction of rotation of the upwind and downwind wind turbines are regulated to increase the mixing of the turbulent airflow passing through the wind turbine farm with the uninterrupted airflow. It is stated that the downwind wind turbine must be placed at a specific distance from the upwind wind turbine to achieve an optimal mixing of the airflows, where this specific distance corresponds to one to five times the rotor diameter of the downwind wind turbine.

US 2011/0140428 A1 discloses a control system in communication with a wind turbine farm wherein the control system monitors and controls the operation of the wind turbine farm. The control system estimates the degradation level of each wind turbine based on sensor data measured on the wind turbine and the power output of the wind turbine and arranges the wind turbines in four groups. The control system then applies a dedicated power limiting algorithm to each group of wind turbines in a stepped order until the reduction in the total power output meets the limiting request received from a grid side.

US 2013/0156577 A1 discloses a control scheme for optimising the operation of a wind turbine farm, wherein a remote controller calculates a maximum thrust set-point for a wind turbine based on sensor data received from sensors located on the wind turbine. The wind turbine is operated according to this maximum thrust set-point so that the thrust acting on the hub does not exceed this maximum value. It is further stated that the sensor data of a downwind wind turbine is used to determine a maximum thrust set-point for an upwind wind turbine. The remote controller generates three set-points for controlling power, voltage and thrust in the wind turbine and transmits a control signal for each set-point to a local controller via three separate lines of the communications link. The remote controller cannot communicate with the local controller via an existing communications link with limited control capabilities, thus new control wires and a new communications link have to be installed.
There exists a need for an alternative control method of optimising the operation of a wind turbine which can be implemented into a control system of a wind turbine farm.

US 2013166082A1 discloses a method for optimizing one or more farm-level metrics in a wind farm. The method includes identifying an optimization objective and one or more decision variables for optimization. Furthermore, the method includes optimizing the optimization objective based on wake-affected wind conditions, power capture values, or damage equivalent load values, to calculate optimum decision variable values for each wind turbine. However, the disclosure relies on rather complicated methods of optimisation and wake-models and relies on the availability or access to direct control of wind turbines in the farm.

### Object of the Invention

An object of this invention is to provide a system and method for operating a wind turbine farm that solves the above-mentioned problems.

An object of this invention is to provide a system that provides a flexible interface for connecting to different types of wind turbines.

An object of this invention is to provide a method that is capable of communicating with different types of wind turbine control systems.

An object of this invention is to provide a system and method for operating a wind turbine farm that provides improved control options for a third-party operator.

### Description of the Invention

An object of the invention is achieved by a system for controlling a wind turbine in a wind turbine farm, comprising a plurality of wind turbines and a remote control unit configured to communicate with a local control system in said wind turbines via a data link, wherein each of said wind turbines comprises at least two wind turbine blades mounted to a hub which is further rotatably connected to a drive train, wherein the remote control unit is configured to receive input from at least one operating sensor configured to measure at least one operating parameter in at least one of said wind turbines, the remote control unit is configured to determine at least a first control command for the at least one of said wind turbines, characterised in that the remote control unit is further configured to calculate at least a second control command for the at least one of said wind turbines based on the at least first control command using a relationship between a first operating parameter and a second operating parameter of the at least one of said wind turbines, wherein the at least second control command is transmitted to the at least one of said wind turbines via the data link, wherein the remote control unit is configured to indirectly control the first control command via the second control command.

The term "upwind wind turbine" is defined as a wind turbine which is only influenced by the free airflow of the incoming wind. The term "downwind wind turbine" is defined as a wind turbine which is influenced by the turbulent airflow derived from one or more upwind wind turbines and, optionally, also from other downwind wind turbines. The term "normal power command" is defined as the power setting at which the wind turbine is operated to produce a maximum or nominal power output. The general term "command" is defined as any control value or control set-point used in the wind turbine to regulate a corresponding operating parameter.

This provides an alternate control system for optimising the overall power production of the wind turbine farm by indirectly regulating a specific control parameter of selected wind turbines via another control parameter. This control system is also capable of altering the airflow passing through the wind turbine farm so that the turbulence experienced at the downwind wind turbines is reduced. This, in turn, contributes to lower the Levelized Cost of Energy (LCOE) costs for the wind turbine farm operator. The present control system is suitable for controlling wind turbine farms wherein limited control options are available for the operator.

According to one embodiment, the wind turbine farm further comprises at least one ambient sensor configured to measure at least one ambient parameter, wherein the at least one ambient parameter is used by the remote control unit to determine at least one of the first control command, the second control command, and the relationship.

One or more ambient sensors, such as anemometers, wind vanes, LIDAR systems, humidity sensors, pressure sensors, temperature sensors, weather stations, and other suitable sensors, are positioned on or relative to the individual wind turbines or nearby the wind turbine farm. These ambient sensors are configured to measure one or more ambient parameters, such as air density, ambient temperature, ambient pressure, humidity level, wind speed, wind direction, turbulence level, and other suitable ambient parameters. The ambient parameters may be measured periodically or over a predetermined time period. This allows the ambient conditions to be determined by ambient measurements performed by the ambient sensors.

Alternatively, the ambient conditions, e.g. the wind direction and wind speed, may be determined from one or more external sources, e.g. from weather forecast for the geographic area in which the wind turbine farm is located. The ambient conditions may thus be determined indirectly without the use of local ambient sensors.

The remote control unit may analyse these ambient data to determine the first control command, the second control command, and/or the relationship between the first and second operating parameters. The operating data may optionally be combined with the ambient data to determine the first control command, the second control command, and/or the relationship.

According to one embodiment, the remote control unit is a remote server unit further connected to at least one optional database, wherein at least an operating system is configured to run on the remote server unit and to communicate with the wind turbines via the data link, e.g. a SCADA link.

The remote control unit is located at a remote location, such as a central monitoring or control station, a server park, or another suitable location. The remote control unit comprises at least one remote server unit which is connected to at least one database in which the measured ambient data, operating data, and other relevant parameters are stored. The database may be an internal memory unit located within the remote server unit or a separate memory unit connected to the remote server unit. The remote server unit and database each comprise a communications module that enables the two units to communicate with each other. Likewise, the remote server unit and the wind turbine farm, e.g. the individual wind turbines thereof, each comprise a communications module that enables the remote server unit to communicate with the wind turbine farm. The server unit may communicate directly with each wind turbine or via a substation located in the wind turbine farm. This allows the wind turbine operator or owner to monitor and control the performance and the operating status of the wind turbine farm from a remote location.

The connection between the remote server unit and the database may be a wired connection, e.g. data cables, or a wireless connection, e.g. a WIFI-connection. The remote control unit is further communicating with the wind turbine farm via another wired or wireless connection. The remote control unit, e.g. the remote server unit, is in example connected to the wind turbine farm via a SCADA-link or another suitable data link. This allows the ambient data, operating data, and other collected data to be stored and analysed at a central location. This also provides a flexible interface capable of communicating with any OEM interface using a standardised communications protocol independent of the layout of the wind turbine farm.

An operating system is implemented on the remote server unit, e.g. on a microprocessor thereof, and configured to provide access to the data stored in the database. A wind turbine operator or owner may access these data via a user interface, e.g. a web page or a dedicated graphical user interface. This provides an easy access to the stored data from any type of platform, such as a smartphone, a tablet, a laptop, a stationary computer, or another suitable platform.

The control algorithm of the present control system may be implemented as an add-on module or application capable of interacting with the above-mentioned operating system. Alternatively, the control algorithm may be incorporated into the operating system so that they act as a single unit. This enables the present control system to be adapted to interact with any existing remote monitoring systems having a database in which the ambient data, the operating data, and other relevant data are stored.

According to a special embodiment, the at least first control command is configured for controlling a pitch angle of the at least one of said wind turbines, and the first operating parameter is the pitch angle.

One or more of the individual wind turbines may comprise one or more operating sensors, such as a vibration sensor, a rotational speed sensor, a torque sensor, an angular position sensor, a temperature sensor, an encoder, a wattmeter, a voltmeter, or another suitable sensor. These operating sensors are configured to measure one or more operating parameters, such as a vibration level, a rotational speed, a pitch angle, a yaw angle, a torque level of the rotation shaft, a cooling temperature of the cooling system, a power output, or another suitable operating parameter. These operating data may be stored in the same database as the ambient data or in a separate database. Additionally, the control parameters, e.g. a power command, a pitch angle command, a torque command, a rotational speed command, a yaw angle command, and other control parameters, used to control the operation of each wind turbine may also be stored in the database. This allows the operator or owner of the wind turbine farm to further monitor the performance and the operating status of each wind turbine located in the wind turbine farm.

The remote control unit, e.g. a controller thereof, may be configured to analyse the ambient data and, optionally, the operating data to determine one or more control commands for controlling at least one selected wind turbine. In example, the remote control unit may generate at least one first control command for controlling the pitch angle and/or the rotational speed of the selected wind turbine. Likewise, the current pitch angle and/or rotational speed may be measured using an angular position sensor or an encoder. Additionally or alternatively, the remote control unit may generate another first control command for controlling the yaw angle of the selected wind turbine, and the yaw angle may be measured using an angular position sensor or an encoder. This or these first control commands may be transmitted directly to a local control system in the selected wind turbine, after which the local control system adjusts the operation of the selected wind turbine accordingly. This allows the wind turbine operator or owner to directly regulate the operation of the selected wind turbine provided that the data link and the local control system allow the transmission and adjustment of such control commands.

According to a further special embodiment, the at least second control command is configured for controlling a power output of the at least one of said wind turbines, and the second operating parameter is the power output.

The remote control unit, e.g. the controller, may further be configured to use this or these first control commands to calculate at least one second control command for controlling the selected wind turbine. The second control command is a suitable control command which can be transmitted via the data link and is acknowledged by the local system as an adjustable control command. In example, the remote control unit may calculate at least one second control command for controlling the power output of the selected wind turbine. Likewise, the current power output may be measured using a voltage sensor or a voltmeter. Additionally or alternatively, the remote control unit may calculate another second control command for controlling the structural or fatigue loads of the selected wind turbine, which may be measured by using a suitable load sensor or a strain gauge. This or these second control commands may be transmitted to the selected wind turbine where the local control system adjusts the operation of the selected wind turbine accordingly. This allows the wind turbine operator or owner to indirectly adjust a specific control parameter via another control parameter. This is advantageous if limited control options are available to the wind turbine operator or owner.

According to another special embodiment, the remote control unit is configured to determine the at least a first control command for a number of wind turbines having the same configuration as the at least one of said wind turbines, wherein the at least second control command is transmitted to said number of wind turbines.

The remote control unit uses a unique relationship between a first operating parameter and a second operating parameter to calculate the second control parameter. This relationship may be determined based on previously measured data, e.g. ambient data and operating data, of the selected wind turbine. The calculated second control parameter may advantageously be transmitted to other wind turbines within the wind turbine farm having the same configuration as the selected wind turbine. This allows wind turbines having the same configuration to be controlled simultaneously.

According to another further special embodiment, each of said number of wind turbines comprises an operating sensor configured to measure the first operating parameter, wherein the remote control unit is configured to monitor the signals received from each of said operating sensors.

The remote control unit may receive the signal from multiple operating sensors located in a selected wind turbine and/or in multiple wind turbines. The remote control unit may further receive the signal from multiple ambient sensors located on multiple wind turbines. The remote control unit may be configured to monitor the respective operating parameters and/or ambient parameters, e.g. within a predetermined time window, to detect any changes thereof. The remote control unit may be configured to compare the measured operating parameter and/or ambient parameters to one or more predetermined criteria or threshold values in order to determine if the selected wind turbine(s) have reached the desired operating level or not. If not, then the remote control unit may repeat the above-mentioned control process until the selected wind turbine(s) have reached the desired operating level. If yes, then the control unit may continue to monitor these operating parameters and/or ambient parameters. This allows the wind turbine operator or owner to monitor and track the response to any adjustment of the control parameters and any changes in the ambient conditions.

According to one embodiment, the relationship is derived from a look-up table or is calculated using a transfer function indicative of this relationship.

The remote control unit may apply a suitable transfer function indicative of the relationship to the first control command in order to determine the second control command. The transfer function may be a linear function, a parabolic function, an exponential function, or another suitable transfer function. Alternatively, the remote control unit may use a look-up table to determine the second control command. The look-up table may comprise any suitable data, such as the wind speed, the first control parameter, the second control parameter, and any other relevant data. The control unit optionally has a self-learning function in which the control unit is configured to adapt the value of the transfer function used to determine the second control parameter or the values of the look-up table. The use of a look-up table allows for a more simplified control of the selected wind turbine and reduces the required processor power.

According to one embodiment, the at least one of said wind turbines is an upwind wind turbine, wherein the remote control unit is further configured to generate a power command for said upwind wind turbine which is lower than a normal power command.

The remote control unit selects at least one upwind wind turbine and at least one downwind wind turbine as function of the wind direction. The remote control unit may then calculate a second control command for the selected upwind wind turbine as described above. The remote control unit may be configured to generate a new second control command, e.g. a power command, using a normal second control command, e.g. a normal power command, as input. The new second control command is in example lower than the normal second control command and indicative of a reduced operating level. The operating level of the selected upwind wind turbine may further be increased to its normal operating level by changing the second control command back to its normal value. This provides a suitable trade-off between the operation time of the individual wind turbines and the overall power production which in turn reduces the Operation and Maintenance (O&M) costs. This also reduces the structural and/or dynamic loads on the individual wind turbines.

The remote control unit may further either maintain the downwind wind turbines at their current operating level or adjust their operating level also. The remote control unit may adjust the operating level of the downwind wind turbine in a similar manner as described above, wherein another unique relationship between the first operating parameter and a second operating parameter of the downwind wind turbine may be used to adjust the control parameters thereof. In example, the remote control unit may use a new second control command for this downwind wind turbine which is indicative of an increased or reduced operating level. This allows for an alternative control of the individual wind turbines in the wind turbine farm that takes the specific layout into account. This also allows the remote control unit to determine a suitable trade-off between the power or energy loss of the upwind wind turbine and the increase in power or energy of the downwind wind turbine.

Conventional control systems optimise the performance of the wind turbine farms by directly regulating the pitch angle of the individual wind turbines. The present control system is particularly suited for control applications that provide limited control options for the wind turbine operator or owner, e.g. a third party. The present invention solves this problem by indirectly controlling a selected control parameter by adjusting another control parameter. This, in turn, allows the present control system to be adapted to communicate with the local control system of different wind turbine manufactures and different firmwares located in different types of wind turbines. This allows for a more optimal control of the wind turbine farm which, in turn, may lead to an increase in the overall power production and/or overall operating time of the individual wind turbines.

In example, a power reduction of 3% of an upwind turbine may result in an increase in power of 4% of a downwind wind turbine. This in turn gives an overall increase in the power production of the wind turbine farm.

An object of the invention is also achieved by a method for controlling a wind turbine in a wind turbine farm, comprising a plurality of wind turbines and a remote control unit configured to communicate with a local control system in said wind turbines via a data link, wherein each of said wind turbines comprises at least two wind turbine blades mounted to a hub which is further rotatably connected to a drive train, wherein the method comprises the steps of:
- measuring at least one operating parameter in at least one of said wind turbines,
- determining at least a first control command for the at least one of said wind turbines, characterised by
- calculating at least a second control command for the at least one of said wind turbines based on the at least first control command using a relationship between a first operating parameter and a second operating parameter of the at least one of said wind turbines, and
- transmitting the at least second control command to the at least one of said wind turbines via the data link which adjusts its operation accordingly, wherein the first control command is indirectly controlled via the second control command.

This provides an alternative control method for operating a wind turbine farm which also allows for an optimised power production of the wind turbine farm. This control method also allows for the reduction of the structural and/or dynamic loads on the individual wind turbines. The present control method is suitable for controlling wind turbine farms wherein limited control options are available for the operator. This, in turn, lowers the LCOE costs for the wind turbine farm operator. This control method can also be used to alter the airflow of the passing wind of an upwind wind turbine and, thus, reduces the turbulence experienced by the downwind wind turbines.

The present control method can advantageously be implemented in a remote control or monitoring system, e.g. as a separate control module coupled to an existing control/monitoring system. This allows the wind turbine farm operator or owner to access the ambient data, operating data, and other stored data from different platforms as described earlier.

According to one embodiment, the method further comprises the step of:
- measuring at least one ambient parameter using at least one ambient sensor, wherein the at least first control command, the at least second control command, or the relationship is determined based on the at least one ambient parameter.

The ambient data from various ambient sensors in the wind turbine farm may be measured directly using ambient sensors and stored for later analysis. Alternatively, the ambient data may be determined indirectly from one or more external sources. These ambient data are then analysed to determine at least one first control command of a selected wind turbine, which is used to calculate at least one second control command for of the selected wind turbine using a unique relationship between a first operating parameter and a second operating parameter.

According to a special embodiment, the at least first control command controls a pitch angle of the at least one of said wind turbines, and the first operating parameter is the pitch angle.

The current pitch angle is measured in the selected wind turbine and stored in the control unit. The ambient parameters, e.g. the wind direction and speed, are further measured and stored in the control unit. The ambient parameters are then used to determine a suitable pitch angle command for the selected wind turbine. The ambient parameters may also be used to determine a suitable rotational speed command and/or a suitable yaw angle command for the selected wind turbine. If the local control system and the data link allow the transmission and control of this operating parameter, then these control commands are sent directly to the selected wind turbines and, thus, allow the remote control unit to directly regulate the operation of the individual wind turbines. This is suitable if the wind turbine operator and the wind turbine manufacturer are the same.

According to a further special embodiment, the at least second control command controls a power output of the at least one of said wind turbines, and the second operating parameter is the power output.

If the local control system and the data link only provide limited control options, then at least one second control command is calculated based on the first control command using the relationship mentioned above. The pitch angle command, rotational speed command, and/or yaw angle command may be used as the first control parameter. The second control command may be calculated by applying a transfer function to the first control command, wherein this transfer function is indicative of this relationship. Alternatively, a look-up table is used to determine the second control command. The second control command may thus be determined based on the current ambient conditions, e.g. the wind speed, and the first control parameter. This allows for an indirect control of the first operating parameter by regulating the second operating parameter. This increases the control options for a third-party wind turbine operator.

According to one embodiment, the method further comprises the steps of:
- measuring data, e.g. the first and second operating parameters, in a number of wind turbines having the same configuration as the at least one of said wind turbines, and
- determining said relationship based on said measured data.

The first and second operating parameters are advantageously measured in a plurality, e.g. at least two, of wind turbines having the same configuration, e.g. the same power rating. Alternatively, the first and second operating parameters may be measured in a single wind turbine. The first and second operating parameters are then analysed in the remote control unit to determine the relationship between these operating parameters. A selected ambient parameter, e.g. the wind speed, may further be analysed by the control unit and used to determine the relationship. This allows the relationship to be established for at least one particular wind turbine in the wind turbine farm.

The relationship may be defined by a suitable transfer function or table values in a look-up table. These values of the transfer function or the look-up table may be updated after each run of the control process or when it is deemed necessary, e.g. using a self-learning algorithm.

According to another special embodiment, the at least first control command is determined for said number of wind turbines, and the at least second control command is transmitted to said number of wind turbines.

The second control parameter is transmitted to other wind turbines in the wind turbine farm having the same or a similar configuration. Furthermore, the first and second operating parameters of these wind turbines may be analysed to determine the relationship which in turn is used to determine/calculate the second control parameter. At least one other group of wind turbines having the same or a similar configuration may be controlled in a similar manner as described above. This allows the wind turbines to be operated together in one or more groups. This also provides an improved control of the individual wind turbines in the wind turbine farm.

According to one embodiment, the method further comprises the steps of:
- said step of measuring the at least one operating parameter comprises measuring at least a first operating parameter, e.g. the pitch angle, and
- monitoring the at least first operating parameter in the remote control unit, and determining whether the at least first operating parameter has changed from a first value to a second value.

At least the first operating parameter, e.g. both the first and second operating parameter, is monitored over time or within a predetermined time window. Any changes in the first operating parameter are detected in the remote control unit by comparing the measured value to one or more criteria or threshold values. The remote control unit further evaluates these results to determine if the selected wind turbine has reached the desired operating level or not. If not, then the control process is repeated until the desired operating level is reached. If yes, then the control remote unit continues to monitor the measured operating parameters.

In example, the current pitch angle of the selected wind turbine is monitored and the desired operating level is defined by the desired pitch angle command. The power command may be used in example to adjust the pitch angle of the selected wind turbine.

According to one embodiment, the at least one of said wind turbines is an upwind wind turbine, wherein said step of calculating at least a second control command comprises generating a reduced power command for said upwind wind turbine which is lower than a normal power command.

The selected wind turbine is an upwind wind turbine facing the free airflow of the incoming wind. The selected wind turbine may also be a downwind wind turbine which is influenced by one or more upwind wind turbines. The second control parameter is used to change the operating level of the selected upwind or downwind wind turbine.

The remote control unit uses a normal second control command, e.g. a normal power command, as an input to generate a new and reduced second control parameter, e.g. a reduced power command. The second control command is lower than the normal second control command and indicative of a reduced operating level. In example, the pitch angle may be adjusted from a first pitch angle to a second pitch angle by adjusting the power command from a first power command to a second power command. This provides a suitable trade-off between the operation time of the individual wind turbines and the overall power production, which in turn reduces the Operation and Maintenance (O&M) costs. This also reduces the structural and/or dynamic loads on the individual wind turbines.

The first pitch angle may be between 0 degrees and 5 degrees and the second pitch angle may be between 5 degrees and 15 degrees, wherein the first and second pitch angle are absolute values, i.e. either a positive or negative pitch angle. The first power command may be about 2.5 megawatt (MW) and the second power command may be about 2 MW. The first and second pitch angles and the first and second power commands may be selected according to the specific configuration of the selected wind turbine.

The operating level of the selected downwind wind turbine may be maintained or adjusted as described above. The operating level of the downwind wind turbine may be reduced using another unique relationship between a first operating parameter and a second operating parameter of the downwind wind turbine. This also allows the remote control unit to determine a suitable trade-off between the power or energy loss of the upwind wind turbine and the increase in power or energy of the downwind wind turbine.

The present control algorithm is suitable for controlling wind turbine farms having wind turbines of different manufactures or different power ratings. Also the control algorithm is able to communicate with wind turbine farms via different OEM interfaces or different firmwares.

### Description of the Drawing

The invention is described by example only and with reference to the drawings, wherein:
- Fig. 1: shows an exemplary embodiment of a control system according to the invention,
- Fig. 2: shows a first exemplary flowchart of the control method according to the invention,
- Fig. 3: shows an exemplary graph of the pitch angle as function of the power output of a selected wind turbine,
- Fig. 4: shows an exemplary graph of the power output as function of the pitch angle and the measured wind speed of a selected wind turbine, and
- Fig. 5: shows a second flowchart of the control method.

In the following text, the figures will be described one by one, and the different parts and positions seen in the figures will be numbered with the same numbers in the different figures. Not all parts and positions indicated in a specific figure will necessarily be discussed together with that figure.

### Position number list

1. Wind turbines
2. Remote control unit
3. Database
4. Connection
5. Wind turbine blades
6. Hub
7. Drive train
8. Ambient sensor
9. Wind direction
10. Operating sensor
11. Pitch angle
12. Power output
13. Unique relationship
14. Wind speed
15. Desired pitch angle
16. Measured pitch angle
17. Pitch error
18. Controller
19. Power command

### Detailed Description of the Invention

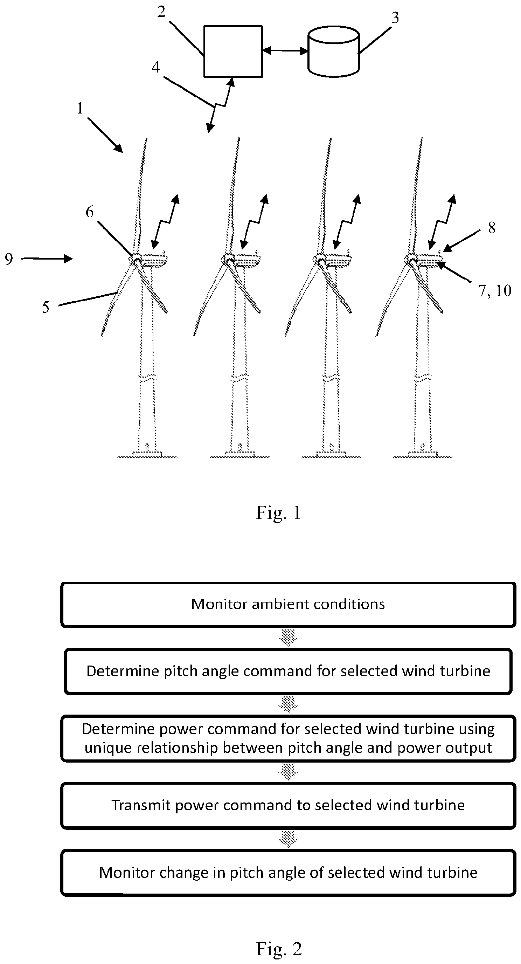

Fig. 1 shows an exemplary embodiment of the system for controlling the operation of a wind turbine farm comprising a plurality of individual wind turbines 1, here only four wind turbines are shown. The system comprises a remote control unit 2 connected to a database 3 configured to store ambient data, operating data, and other suitable data received from the wind turbine farm. The remote control unit 2 is a remote control unit configured to communicate with the wind turbines 1 in the wind turbine farm via a wired or a wireless connection 4. In example, the remote control unit 2 and the wind turbines 1 are connected 4 via a SCADA-system.

Each wind turbine 1 comprises at least two wind turbine blades 5 mounted to a hub 6 which further is rotatably connected to a drive train 7 in the wind turbine 1. The drive train 7 is configured to generate a power output which in turn is transmitted to an electrical power grid (not shown). The wind turbine 1 further comprises a communications module for communicating with a corresponding communications module in the remote control unit 2. A local control system (not shown) is used to control the operation of the wind turbine 1 using one or more local control parameters and is further able to communicate with the remote control unit 2, e.g. a controller thereof.

At least one ambient sensor 8 is arranged relative to the individual wind turbines 1. The ambient sensor 8 is configured to measure at least one ambient parameter, e.g. a wind speed, which is stored in the database 3 via the remote control unit 2. The ambient sensor 8 also detects a wind direction 9 relative to the wind turbine 1, which in turn is also stored in the database 3. The wind turbine 1 may use a yaw system (not shown) to track or align the rotor with the wind direction. Optionally, at least one operating sensor 10 is arranged relative to the drive train 7. The operating sensor 10 is configured to measure at least one operating parameter which may be stored in the database 3 also. In example, the operating sensor 10 is an angular sensor configured to measure the pitch angle of the wind turbine blades 5.

Fig. 2 shows a first exemplary flowchart of the control method according to the invention for optimising the overall power production of the wind turbine farm. The present control method is implemented on an operating system running on the remote control unit 2, e.g. as in a control module capable of communicating with an existing control system.

In an initial step, the ambient parameters are measured over time and stored in the database 3 to form a set of ambient data. The operating parameters of a selected wind turbine 1 are also measured over time and stored in the database 3 to form a set of operating data. The selected wind turbine 1 comprises a first operating sensor measuring a first operating parameter in the form of a pitch angle. The selected wind turbine 1 further comprises a second operating sensor measuring a second operating parameter in the form of a power output.

A controller in the remote control unit 2 then determines a first control command for the selected wind turbine 1 in the form of a pitch angle command based on at least the measured ambient parameters, e.g. the wind speed and the direction.

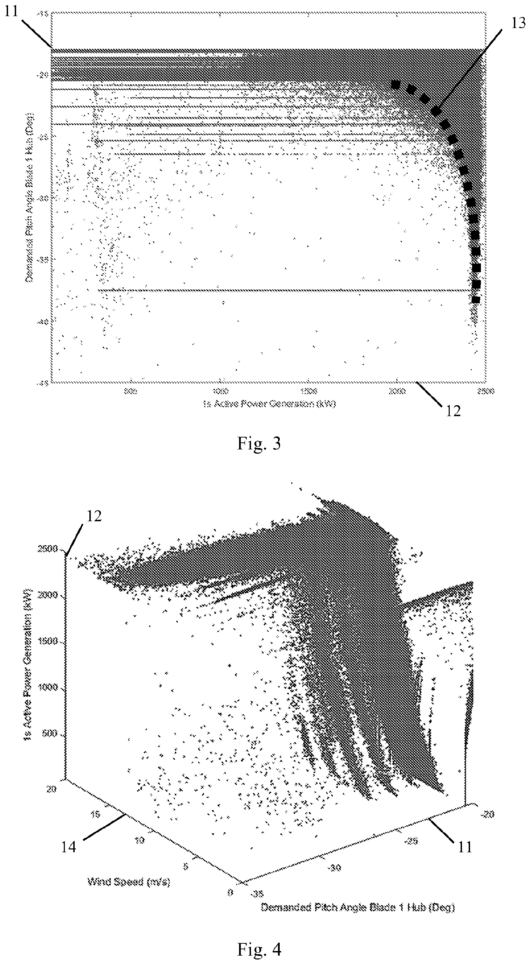

The controller afterwards calculates a second control command for the selected wind turbine 1 in the form of a power command based on the first control parameter. A unique relationship (shown in fig. 3) between the first operating parameter and the second operating parameter is used to calculate the second control command. The controller may also use a look-up table to determine this second control command. A normal second control command is used as an input to generate a reduced second control command for the selected wind turbine 1.

This second control command is then transmitted to the selected wind turbine 1 via the connection 4. The local control system (not shown) in the selected wind turbine 1 adjusts, e.g. reduces, the operating level of the wind turbine 1 accordingly.

The controller finally monitors the operating parameters, e.g. the pitch angle, of the selected wind turbine 1. The measured operating parameter, e.g. the pitch angle, is compared to one or more threshold values to detect any changes. The control process may be repeated until the selected wind turbine 1, e.g. the pitch angle thereof, has reached the desired operating level.

Fig. 3 shows an exemplary graph of the first operating parameter 11, e.g. the pitch angle, as function of the second operating parameter 12, e.g. the power output, of a number of wind turbines 1 having the same configuration. The pitch angle and the power output of each selected wind turbine 1 are combined to form the graph shown in fig. 3.

As illustrated in the graph, a unique relationship 13 exists between the first operating parameter 11 and the second operating parameter 12. This relationship 13 is defined by means of a suitable transfer function or a look-up table. The controller applies this transfer function to the control operating parameter to calculate the second control parameter. Alternatively, the second control parameter is determined using the table values in the look-up table.

Fig. 4 shows an exemplary graph of the second operating parameter 12 as function of the first operating parameter 11 and a measured wind speed 14 of the selected wind turbines 1. Here, the selected wind turbines 1 have a power rating of 2,5 MW. Here, the pitch angle is indirectly adjusted for the selected wind turbines 1 by adjusting the power command signal.

The remote control unit 2, e.g. the controller thereof, generates a new second control command for the selected wind turbines 1 using the relationship 13 and the first control command as mentioned earlier. The controller may use a normal second control command or a current second control command as an input for generating this new second control command. The new second control command is in example lower than the normal second control command. This second control command is transmitted to each of the selected wind turbines 1 which adjusts their operating level accordingly until the first operating parameter reaches the desired operating level.

In example, the pitch angle of the selected wind turbine 1 may be reduced from a first pitch angle having an absolute value of 35 degrees to 40 degrees to a second pitch angle having an absolute value of 20 degrees to 25 degrees. This is done by reducing the power output of the selected wind turbine 1 from a first power output of about 2.5 MW to a second power output of about 2 MW as shown in figs. 3 and 4. This also allows the present control system to be adapted to communicate with local control systems of different wind turbine manufactures and different firmwares located in different types of wind turbines.

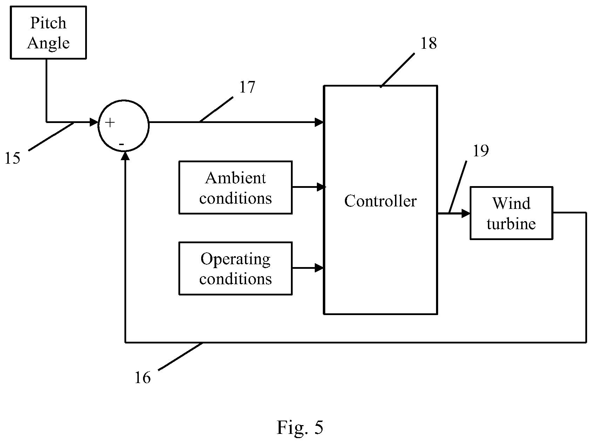

Fig. 5 shows a second exemplary flowchart of the control method wherein the wind turbine owner or operator may set a desired pitch angle 15 as a reference value in the control unit. A current pitch angle 16 is measured on the selected wind turbine 1 and transmitted to the control unit.

A pitch angle error 17 between the desired pitch angle 15 and the measured pitch angle 16 is calculated. The pitch angle error 17 is used as an input in the controller 18 for determining a desired power command 19 for the selected wind turbine 1. The power command 19 is transmitted to the wind turbine 1 which adjusts its pitch angle 16 accordingly. The ambient conditions and the operating conditions of the wind turbine 1 may also be used as inputs for the controller 18, as indicated in fig. 5. The controller 18 may further use the ambient conditions and the operating conditions to determine the desired power command 19.
The desired pitch angle 15 and the desired power command 19 are used to change, e.g. reduce, the operating level of the wind turbine 1.

## Claims

1. A system for controlling a wind turbine in a wind turbine farm comprising a plurality of wind turbines (1) and a remote control unit (2) configured to communicate with a local control system in said wind turbines (1) via a data link, wherein each of said wind turbines (1) comprises at least two wind turbine blades (5) mounted to a hub (6) which is further rotatably connected to a drive train (7), wherein at least one of said wind turbines (1) comprises at least one operating sensor (10) configured to measure at least one operating parameter, the remote control unit (2) is configured to receive said at least one operating parameter and to determine at least a first control command for the at least one of said wind turbines (1), **characterised in that** the remote control unit (2) is configured to indirectly control a selected control parameter by adjusting another control parameter, where at least a second control command for the at least one of said wind turbines (1) is calculated as a function of the at least first control command using a relationship (13) between a corresponding first operating parameter and a corresponding second operating parameter of the at least one of said wind turbines (1), wherein the relationship (13) is defined by means of a suitable transfer function or look-up table based on previously measured data, wherein the at least second control command is transmitted to the at least one of said wind turbines (1) via the data link, where the local control system in the at least one of said wind turbines (1) adjusts the operation accordingly.

2. A system according to claim 1, **characterised in that** the wind turbine farm further comprises at least one ambient sensor (8) configured to measure at least one ambient parameter, wherein the at least one ambient parameter is used by the remote control unit (2) to determine at least one of the first control command, the second control command, and the relationship (13).

3. A system according to claim 1 or 2, **characterised in that** the remote control unit (2) is a remote server unit further connected to at least one optional database (3), wherein at least an operating system is configured to run on the remote server unit and to communicate with the wind turbines (1) via the data link, e.g. a SCADA link.

4. A system according to any one of claims 1 to 3, **characterised in that** the at least first control command is configured for controlling a pitch angle (11) of the at least one of said wind turbines (1), and the first corresponding operating parameter is the pitch angle (11).

5. A system according to claim 4, **characterised in that** the at least second control command is configured for controlling a power output (12) of the at least one of said wind turbines (1), and the corresponding second operating parameter is the power output (12).

6. A system according to any one claims 1 to 5, **characterised in that** the remote control unit (2) is configured to determine the at least same first control command for a number of wind turbines (1) having the same configuration as the at least one of said wind turbines (1), wherein the at least same second control command is transmitted to said number of wind turbines (1).

7. A system according to claim 6, **characterised in that** each of said number of wind turbines (1) comprises an operating sensor configured to measure the same corresponding first operating parameter, wherein the remote control unit (2) is configured to monitor the signals received from each of said operating sensors.

8. A system according to any one of claims 1 to 7, **characterised in that** the at least one of said wind turbines (1) is an upwind wind turbine, wherein the remote control unit is further configured to generate a power command (19) for said upwind wind turbine which power command (19) is lower than a maximum or nominal power command.

9. A method of controlling a wind turbine in a wind turbine farm comprising a plurality of wind turbines (1) and a remote control unit (2) configured to communicate with a local control system in said wind turbines (1) via a data link, wherein each of said wind turbines (1) comprises at least two wind turbine blades (5) mounted to a hub (6) which is further rotatably connected to a drive train (7), wherein the method comprises the steps of:
- measuring at least one operating parameter in at least one of said wind turbines (1),
- determining at least a first control command for the at least one of said wind turbines (1), **characterised by**
- the remote control unit is indirectly controlling a selected control parameter by adjusting another control parameter by:
o calculating at least a second control command for the at least one of said wind turbines as a function of the at least first control command using a relationship (13) between a corresponding first operating parameter and a corresponding second operating parameter of the at least one of said wind turbines (1) 1), wherein the relationship (13) is defined by means of a suitable transfer function or look-up table based on previously measured data, and
- transmitting the at least second control command to the at least one of said wind turbines (1) via the data link which adjusts its operation accordingly.

10. A method according to claim 9, **characterised in that** the method further comprises the step of:
- measuring at least one ambient parameter using at least one ambient sensor (8), wherein the at least first control command, the at least second control command, or the relationship (13) is determined based on the at least one ambient parameter.

11. A method according to claim 9 or 10, **characterised in that** the at least first control command controls a pitch angle (11) of the at least one of said wind turbines (1), and the corresponding first operating parameter is the pitch angle (11).

12. A method according to any one of claims 9 to 11, **characterised in that** the at least second control command controls a power output (12) of the at least one of said wind turbines (1), and the corresponding second operating parameter is the power output (12).

13. A method according to any one of claims 9 to 12, **characterised in that** the method further comprises the steps of:
- measuring data, e.g. the same corresponding first and second operating parameters, in a number of wind turbines (1) having the same configuration as the at least one of said wind turbines (1), and
- determining said relationship (12) based on said measured data.

14. A method according to claim 13, **characterised in that** the at least same first control command is determined for said number of wind turbines (1), and the at least same second control command is transmitted to said number of wind turbines (1).

15. A method according to any one of claims 9 to 14, **characterised in that** the method further comprises the steps of:
- said step of measuring the at least one operating parameter comprises measuring at least the corresponding first operating parameter, e.g. the pitch angle (16), and
- monitoring at least the corresponding first operating parameter in the remote control unit (2), and determining whether at least the corresponding first operating parameter has changed from a first value to a second value.

16. A method according to any one of claims 9 to 15, **characterised in that** the at least one of said wind turbines (1) is an upwind wind turbine, wherein said step of calculating at least a second control command comprises generating a reduced power command for said upwind wind turbine, which reduced power command (19) is lower than a maximum or nominal power command.

## Patentansprüche

1. System zur Steuerung einer Windturbine in einem Windpark, der eine Vielzahl von Windturbinen (1) und eine Fernsteuereinheit (2) umfasst, die zum Kommunizieren über eine Datenverknüpfung mit einem lokalen Steuersystem in den Windturbinen (1) konfiguriert ist, wobei jede der Windturbinen (1) mindestens zwei Windturbinenblätter (5) umfasst, die auf eine Nabe (6) montiert sind, welche ferner drehbar mit einem Antriebsstrang (7) verbunden ist, wobei mindestens eine der Windturbinen (1) mindestens einen Betriebssensor (10) umfasst, der zum Messen mindestens eines Betriebsparameters konfiguriert ist, wobei die Fernsteuereinheit (2) zum Empfangen des mindestens einen Betriebsparameters und zum Bestimmen mindestens eines ersten Steuerbefehls für die mindestens eine der Windturbinen (1) konfiguriert ist, **dadurch gekennzeichnet, dass** die Fernsteuereinheit (2) zum indirekten Steuern eines ausgewählten Steuerparameters durch Einstellen eines anderen Steuerparameters konfiguriert ist, wobei mindestens ein zweiter Steuerbefehl für die mindestens eine der Windturbinen (1) als eine Funktion des mindestens ersten Steuerbefehls unter Verwendung eines Zusammenhangs (13) zwischen einem entsprechenden ersten Betriebsparameter und einem entsprechenden zweiten Betriebsparameter der mindestens einen der Windturbinen (1) berechnet ist, wobei der Zusammenhang (13) mittels einer geeigneten Übertragungsfunktion oder Nachschlagtabelle basierend auf zuvor gemessenen Daten definiert ist, wobei der mindestens zweite Steuerbefehl über die Datenverknüpfung an die mindestens eine der Windturbinen (1) übermittelt wird, wobei das lokale Steuersystem in der mindestens einen der Windturbinen (1) den Betrieb entsprechend einstellt.

2. System nach Anspruch 1, **dadurch gekennzeichnet, dass** der Windpark ferner mindestens einen Umgebungssensor (8) umfasst, der zum Messen mindestens eines Umgebungsparameters konfiguriert ist, wobei der mindestens eine Umgebungsparameter durch die Fernsteuereinheit (2) zum Bestimmen mindestens eines des ersten Steuerbefehls, des zweiten Steuerbefehls und des Zusammenhangs (13) verwendet wird.

3. System nach Anspruch 1 oder 2, **dadurch gekennzeichnet, dass** die Fernsteuereinheit (2) eine Fernservereinheit ist, die ferner mit mindestens einer optionalen Datenbank (3) verbunden ist, wobei mindestens ein Betriebssystem zum Ausführen auf der Fernservereinheit und zum Kommunizieren mit den Windturbinen (1) über die Datenverknüpfung, z. B. einer SCADA-Verknüpfung, konfiguriert ist.

4. System nach einem der Ansprüche 1 bis 3, **dadurch gekennzeichnet, dass** der mindestens erste Steuerbefehl zur Steuerung eines Steigungswinkels (11) der mindestens einen der Windturbinen (1) konfiguriert ist und der erste entsprechende Betriebsparameter der Steigungswinkel (11) ist.

5. System nach Anspruch 4, **dadurch gekennzeichnet, dass** der mindestens zweite Steuerbefehl zur Steuerung einer Leistungsabgabe (12) der mindestens einen der Windturbinen (1) konfiguriert ist und der entsprechende zweite Betriebsparameter die Leistungsabgabe (12) ist.

6. System nach einem der Ansprüche 1 bis 5, **dadurch gekennzeichnet, dass** die Fernsteuereinheit (2) zum Bestimmen des mindestens gleichen ersten Steuerbefehls für eine Anzahl von Windturbinen (1) konfiguriert ist, die dieselbe Konfiguration wie die mindestens eine der Windturbinen (1) aufweist, wobei der mindestens gleiche zweite Steuerbefehl an die Anzahl von Windturbinen (1) übermittelt wird.

7. System nach Anspruch 6, **dadurch gekennzeichnet, dass** jede der Anzahl von Windturbinen (1) einen Betriebssensor umfasst, der zum Messen desselben entsprechenden ersten Betriebsparameters konfiguriert ist, wobei die Fernsteuereinheit (2) zum Überwachen der Signale konfiguriert ist, die von jedem der Betriebssensoren empfangen werden.

8. System nach einem der Ansprüche 1 bis 7, **dadurch gekennzeichnet, dass** die mindestens eine der Windturbinen (1) eine windwärts gelegene Windturbine ist, wobei die Fernsteuereinheit ferner zum Generieren eines Leistungsbefehls (19) für die windwärts gelegene Windturbine konfiguriert ist, deren Leistungsbefehl (19) niedriger als ein Maximal- oder Nennleistungsbefehl ist.

9. Verfahren zur Steuerung einer Windturbine in einem Windpark, der eine Vielzahl von Windturbinen (1) und eine Fernsteuereinheit (2) umfasst, die zum Kommunizieren über eine Datenverknüpfung mit einem lokalen Steuersystem in den Windturbinen (1) konfiguriert ist, wobei jede der Windturbinen (1) mindestens zwei Windturbinenblätter (5) umfasst, die auf eine Nabe (6) montiert sind, welche ferner drehbar mit einem Antriebsstrang (7) verbunden ist, wobei das Verfahren die folgenden Schritte umfasst:
- Messen mindestens eines Betriebsparameters in mindestens einer der Windturbinen (1),
- Bestimmen mindestens eines ersten Steuerbefehls für die mindestens eine der Windturbinen (1), **gekennzeichnet dadurch:**
- **dass** die Fernsteuereinheit indirekt einen ausgewählten Steuerparameter durch Einstellen eines anderen Steuerparameters durch Folgendes steuert:
o Berechnen mindestens eines zweiten Steuerbefehls für die mindestens eine der Windturbinen als eine Funktion des mindestens ersten Steuerbefehls unter Verwendung eines Zusammenhangs (13) zwischen einem entsprechenden ersten Betriebsparameter und einem entsprechenden zweiten Betriebsparameter der mindestens einen der Windturbinen (1) 1), wobei der Zusammenhang (13) mittels einer geeigneten Übertragungsfunktion oder Nachschlagtabelle basierend auf zuvor gemessenen Daten definiert ist, und
- Übermitteln des mindestens zweiten Steuerbefehls über die Datenverknüpfung, welche ihren Betrieb entsprechend einstellt, an die mindestens eine der Windturbinen (1).

10. Verfahren nach Anspruch 9, **dadurch gekennzeichnet, dass** das Verfahren ferner die folgenden Schritte umfasst:
- Messen mindestens eines Umgebungsparameters unter Verwendung mindestens eines Umgebungssensors (8), wobei der mindestens erste Steuerbefehl, der mindestens zweite Steuerbefehl oder der Zusammenhang (13) basierend auf dem mindestens einen Umgebungsparameter bestimmt wird.

11. Verfahren nach Anspruch 9 oder 10, **dadurch gekennzeichnet, dass** der mindestens erste Steuerbefehl einen Steigungswinkel (11) der mindestens einen der Windturbinen (1) steuert und der entsprechende erste Betriebsparameter der Steigungswinkel (11) ist.

12. Verfahren nach einem der Ansprüche 9 bis 11, **durch gekennzeichnet,** dass der mindestens zweite Steuerbefehl eine Leistungsabgabe (12) der mindestens einen der Windturbinen (1) steuert und der entsprechende zweite Betriebsparameter die Leistungsabgabe (12) ist.

13. Verfahren nach einem der Ansprüche 9 bis 12, **dadurch gekennzeichnet, dass** das Verfahren ferner die folgenden Schritte umfasst:
- Messen von Daten, z. B. desselben entsprechenden ersten und zweiten Betriebsparameters, in einer Anzahl von Windturbinen (1) mit derselben Konfiguration wie die mindestens eine der Windturbinen (1), und
- Bestimmen des Zusammenhangs (12) basierend auf den gemessenen Daten.

14. Verfahren nach Anspruch 13, **dadurch gekennzeichnet, dass** der mindestens gleiche erste Steuerbefehl für die Anzahl von Windturbinen (1) bestimmt ist und der mindestens gleiche zweite Steuerbefehl an die Anzahl von Windturbinen (1) übermittelt wird.

15. Verfahren nach einem der Ansprüche 9 bis 14, **dadurch gekennzeichnet, dass** das Verfahren ferner die folgenden Schritte umfasst:
- der Schritt zur Messung des mindestens einen Betriebsparameters umfasst ein Messen von mindestens dem entsprechenden ersten Betriebsparameter, z. B. den Steigungswinkel (16), und
- Überwachen von mindestens dem entsprechenden ersten Betriebsparameter in der Fernsteuereinheit (2) und Bestimmen, ob sich mindestens der entsprechende erste Betriebsparameter von einem ersten Wert zu einem zweiten Wert geändert hat.

16. Verfahren nach einem der Ansprüche 9 bis 15, **dadurch gekennzeichnet, dass** die mindestens eine der Windturbinen (1) eine windwärts gelegene Windturbine ist, wobei der Schritt zur Berechnung des mindestens zweiten Steuerbefehls das Generieren eines Befehls zu reduzierter Leistung für die windwärts gelegene Windturbine umfasst, wobei der Befehl (19) zu reduzierter Leistung niedriger als ein Maximal- oder Nennleistungsbefehl ist.

## Revendications

1. Système de commande d'une éolienne dans un parc éolien comprenant une pluralité d'éoliennes (1) et une unité de commande à distance (2) configurée pour communiquer avec un système de commande local dans lesdites éoliennes (1) via une liaison de données, dans lequel chacune desdites éoliennes (1) comprend au moins deux pales d'éolienne (5) montées sur un moyeu (6) qui est en outre connecté de manière rotative à un groupe motopropulseur (7), dans lequel au moins une desdites éoliennes (1) comprend au moins un capteur de fonctionnement (10) configuré pour mesurer au moins un paramètre de fonctionnement, l'unité de commande à distance (2) est configurée pour recevoir ledit au moins un paramètre de fonctionnement et pour déterminer au moins une première commande de contrôle pour la au moins une desdites éoliennes (1), **caractérisé en ce que** l'unité de commande à distance (2) est configurée pour commander de manière indirecte un paramètre de commande sélectionné en ajustant un autre paramètre de commande, où au moins une deuxième commande de contrôle pour la au moins une desdites éoliennes (1) est calculée comme une fonction de la au moins première commande de contrôle à l'aide d'une relation (13) entre un premier paramètre de fonctionnement correspondant et un deuxième paramètre de fonctionnement correspondant de la au moins une desdites éoliennes (1), dans lequel la relation (13) est défini au moyen d'une fonction de transfert appropriée ou table de recherche basée sur des données mesurées précédemment, dans lequel la au moins deuxième commande de contrôle est transmise à la au moins une desdites éoliennes (1) via la liaison de données, où le système de commande local dans la au moins une desdites éoliennes (1) ajuste le fonctionnement en conséquence.

2. Système selon la revendication 1, **caractérisé en ce que** le parc éolien comprend en outre au moins un capteur ambiant (8) configuré pour mesurer au moins un paramètre ambiant, dans lequel le au moins un paramètre ambiant est utilisé par l'unité de commande à distance (2) pour déterminer au moins une de la première commande de contrôle, la deuxième commande de contrôle, et la relation (13).

3. Système selon la revendication 1 ou 2, **caractérisé en ce que** l'unité de commande à distance (2) est une unité de serveur à distance connectée en outre à au moins une base de données facultative (3), dans lequel au moins un système d'exploitation est configuré pour s'exécuter sur l'unité de serveur à distance et pour communiquer avec les éoliennes (1) via la liaison de données, par exemple une liaison SCADA.

4. Système selon une quelconque des revendications 1 à 3, **caractérisé en ce que** la au moins première commande de contrôle est configurée pour commander un angle de pas (11) de la au moins une desdites éoliennes (1), et le premier paramètre de fonctionnement correspondant est l'angle de pas (11).

5. Système selon la revendication 4, **caractérisé en ce que** la au moins deuxième commande de contrôle est configurée pour commander une puissance de sortie (12) de la au moins une desdites éoliennes (1), et le deuxième paramètre de fonctionnement correspondant est la puissance de sortie (12).

6. Système selon une quelconque des revendications 1 à 5, **caractérisé en ce que** l'unité de commande à distance (2) est configurée pour déterminer la au moins même première commande de contrôle pour un nombre d'éoliennes (1) ayant la même configuration que la au moins une desdites éoliennes (1), dans lequel la au moins même deuxième commande de contrôle est transmise audit nombre d'éoliennes (1).

7. Système selon la revendication 6, **caractérisé en ce que** chacune dudit nombre d'éoliennes (1) comprend un capteur de fonctionnement configuré pour mesurer le même premier paramètre de fonctionnement correspondant, dans lequel l'unité de commande à distance (2) est configurée pour surveiller les signaux reçus de chacun desdites capteurs de fonctionnement.

8. Système selon une quelconque des revendications 1 à 7, **caractérisé en ce que** la au moins une desdites éoliennes (1) est une éolienne face au vent, dans lequel l'unité de commande à distance est en outre configurée pour générer une commande de puissance (19) pour ladite éolienne face au vent dont la commande de puissance (19) est inférieure à une commande de puissance maximale ou nominale.

9. Procédé de commande d'une éolienne dans un parc éolien comprenant une pluralité d'éoliennes (1) et une unité de commande à distance (2) configurée pour communiquer avec un système de commande local dans lesdites éoliennes (1) via une liaison de données, dans lequel chacune desdites éoliennes (1) comprend au moins deux pales d'éolienne (5) montées sur un moyeu (6) qui est en outre connecté de manière rotative à un groupe motopropulseur (7), dans lequel le procédé comprend les étapes consistant à :
- mesurer au moins un paramètre de fonctionnement dans au moins une desdites éoliennes (1),
- déterminer au moins une première commande de contrôle pour la au moins une desdites éoliennes (1), **caractérisé par**
- l'unité de commande à distance commande de manière indirecte un paramètre de commande sélectionné en ajustant un autre paramètre de commande en :
o calculant au moins une deuxième commande de contrôle pour la au moins une desdites éoliennes comme une fonction de la au moins première commande de contrôle à l'aide d'une relation (13) entre un premier paramètre de fonctionnement correspondant et un deuxième paramètre de fonctionnement correspondant de la au moins une desdites éoliennes (1) 1), dans lequel la relation (13) est définie au moyen d'une fonction de transfert appropriée ou table de recherche basée sur des données mesurées précédemment, et
- transmettre la au moins deuxième commande de contrôle à la au moins une desdites éoliennes (1) via la liaison de données qui ajuste son fonctionnement en conséquence.

10. Procédé selon la revendication 9, **caractérisé en ce que** le procédé comprend en outre l'étape consistant à :
- mesurer au moins un paramètre ambiant à l'aide d'au moins un capteur ambiant (8), dans lequel la au moins première commande de contrôle, la au moins deuxième commande de contrôle, ou la relation (13) est déterminée sur la base du au moins un paramètre ambiant.

11. Procédé selon la revendication 9 ou 10, **caractérisé en ce que** la au moins première commande de contrôle commande un angle de pas (11) de la au moins une desdites éoliennes (1), et le premier paramètre de fonctionnement correspondant est l'angle de pas (11).

12. Procédé selon une quelconque des revendications 9 à 11, **caractérisé en ce que** la au moins deuxième commande de contrôle commande une puissance de sortie (12) de la au moins une desdites éoliennes (1), et le deuxième paramètre de fonctionnement correspondant est la puissance de sortie (12).

13. Procédé selon une quelconque des revendications 9 à 12, **caractérisé en ce que** le procédé comprend en outre les étapes consistant à :
- mesurer des données, par exemple les mêmes premier et deuxième paramètres de fonctionnement correspondants, dans un nombre d'éoliennes (1) ayant la même configuration que la au moins une desdites éoliennes (1), et
- déterminer ladite relation (12) sur la base desdites données mesurées.

14. Procédé selon la revendication 13, **caractérisé en ce que** la au moins même première commande de contrôle est déterminée pour ledit nombre d'éoliennes (1), et la au moins même deuxième commande de contrôle est transmise audit nombre d'éoliennes (1).

15. Procédé selon une quelconque des revendications 9 à 14, **caractérisé en ce que** le procédé comprend en outre les étapes consistant à :
- ladite étape de mesure du au moins un paramètre de fonctionnement comprend la mesure du au moins premier paramètre de fonctionnement correspondant, par exemple l'angle de pas (16), et
- surveiller au moins le premier paramètre de fonctionnement correspondant dans l'unité de commande à distance (2), et déterminer si au moins le premier paramètre de fonctionnement correspondant a changé d'une première valeur en une deuxième valeur.

16. Procédé selon une quelconque des revendications 9 à 15, **caractérisé en ce que** la au moins une desdites éoliennes (1) est une éolienne face au vent, dans lequel ladite étape de calcul d'au moins une deuxième commande de contrôle comprend la génération d'une commande de puissance réduite pour ladite éolienne face au vent, laquelle commande de puissance réduite (19) est inférieure à une commande de puissance maximale ou nominale.
